**Europäisches Patentamt**

**European Patent Office**

**Office européen des brevets**

(19)

(11) Veröffentlichungsnummer : **0 226 743**
**B1**

(12) # EUROPÄISCHE PATENTSCHRIFT

(45) Veröffentlichungstag der Patentschrift :
28.03.90

(51) Int. Cl.⁵ : **F 16 L 21/02**

(21) Anmeldenummer : **86114441.8**

(22) Anmeldetag : **17.10.86**

(54) Steckverbindungsmuffe für Vortriebsrohre.

(30) Priorität : **19.12.85 DE 3545091**

(43) Veröffentlichungstag der Anmeldung :
**01.07.87 Patentblatt 87/27**

(45) Bekanntmachung des Hinweises auf die Patenterteilung : **28.03.90 Patentblatt 90/13**

(84) Benannte Vertragsstaaten :
**BE DE FR GB NL SE**

(56) Entgegenhaltungen :
**DD—A— 57 775**
**DE—A— 2 501 273**
**DE—U— 1 997 157**
**US—A— 3 453 006**

(73) Patentinhaber : **WOCO Franz-Josef Wolf & Co.**
**Sprudelallee 19**
**D-6483 Bad Soden-Salmünster (DE)**

(72) Erfinder : **Wolf, Franz-Josef**
**Sprudelallee 19**
**D-6483 Bad Soden-Salmünster (DE)**
Erfinder : **Lauer, Hansjörg**
**Marburger Strasse 5**
**D-6483 Bad Soden-Salmünster (DE)**

(74) Vertreter : **Jaeger, Klaus, Dipl.-Chem. Dr. et al**
**Jaeger, Steffens & Köster Patentanwälte Pippinplatz**
**4a**
**D-8035 München-Gauting (DE)**

EP 0 226 743 B1

Beschreibung

Die Erfindung betrifft eine Steckverbindungsmuffe für Vortriebsrohre der im Oberbegriff des Anspruchs 1 genannten Art.

Unter Vortriebsrohren sind Rohre, vorzugsweise aus mineralischen Materialien, zu verstehen, die mit Hilfe der Vortriebstechnik unterirdisch verlegt werden. Bei dieser Art der Rohrverlegung werden die zu verlegenden Rohre von einem Schacht aus unterhalb der Erdoberfläche durch die Erde getrieben, wobei ein Rohr an das andere gesetzt wird. Die aneinander gesetzten Rohre sind nach dem Stand der Technik mit Rohrsteckverbindungen dichtend verbunden.

Bekannte Rohrsteckverbindungen bestehen aus einer Manschette, üblicherweise aus Edelstahl, um Korrosion vorzubeugen, in die die zu verbindenden Rohrspitzenden eingesteckt werden können, und separaten Dichtringen, die über die Rohrspitzenden gezogen werden. Zu der Rohrsteckverbindung gehört außerdem noch ein elastischer Trennflansch, der der Abpufferung der Rohre dient. Der radiale Rohraußendurchmesser des Vortriebrohres muß am Rohrspitzende um die radiale Wanddicke der Rohrsteckverbindung kleiner sein als der radiale Rohraußendurchmesser im restlichen Rohr. Durch dieses konstruktive Merkmal wird erreicht, daß die Rohrsteckverbindung nicht über den Außenmantel des Vortriebrohres radial nach außen vorspringt und so den Vortrieb des Rohres durch das Erdreich behindert. Die Verjüngung des Vortriebrohres zu seinem Rohrspitzende hin wird durch Abschleifen eines Teils des Außenmantels erreicht. Dabei nimmt selbstverständlich die radiale Wandstärke des Rohres am Rohrspitzende ab und damit auch dessen mechanische Festigkeit. Daher ist an jede für Vortriebsrohre bestimmte Rohrsteckverbindung die Forderung nach möglichst geringer radialer Wandstärke der Rohrsteckverbindung zu richten. Diese Anforderung an eine geeignete Rohrsteckverbindung für Vortriebsrohre hat bisher die Weiterentwicklung der hier beschriebenen Rohrsteckverbindung trotz deren offensichtlichen Nachteile verhindert. Als Nachteil kann zum Beispiel angesehen werden, daß die genannte Rohrsteckverbindung aus mindestens vier separaten Bauteilen, nämlich aus einer Manschette, zwei Dichtungsringen und einem Trennflansch besteht, die getrennt für sich hergestellt werden müssen und umständlich bei der Montage zu handhaben sind. Außerdem muß zur axialen Fixierung der Dichtungsringe auf den Rohrspitzenden in diese zusätzlich zu der genannten Schleifbehandlung eine ringförmige Nut eingeschliffen werden. Schließlich ist auch die Edelstahlmanschette im Boden nicht unbegrenzt korrosionsbeständig.

Die geschilderten Nachteile der Rohrsteckverbindung könnten vermieden werden, wenn es gelänge, eine zu einer Baueinheit zusammengefasste elastomerüberzogene Rohrsteckverbindung mit ausreichend kleiner radialer Wanddicke zu schaffen. Zu einer Baueinheit zusammengefasste Rohrsteckverbindungen, deren radiale Wandstärke jedoch viel zu groß ist, als daß solche Rohrsteckverbindungen für Vortriebsrohre verwendet werden könnten, sind bereits bekannt. Die genannte Rohrsteckverbindung besteht aus einer im wesentlichen zylindrischen Stahlhülse und einer auf die Hülse aufvulkanisierten gummielastischen Manschette, an die Dichtungsringe und ein Trennflansch angeformt sind, wobei der lichte Innendurchmesser der Manschette zwischen benachbarten Dichtungsringen über die ganze axiale Länge der Muffe konstant ist. Die Reduzierung der radialen Wanddicke einer solchen Rohrsteckverbindung durch Verkleinerung der radialen Wandstärke der auf eine Hülse aufvulkanisierten Manschette wird in der Praxis dadurch vereitelt, daß derartige Rohrsteckverbindungen zerstörungsfrei nicht mehr herstellbar sind. Die Manschette wird nämlich an die Hülse nach einem Spritzgußverfahren in einem geeigneten Formwerkzeug angeformt. Beim Entformen werden die radial nach innen stehenden Manschettenteile, also der Trennflansch und die Dichtungsringe in axialer Richtung, und zwar in Bewegungsrichtung des Formkernes beim Entformen, erheblich belastet, da der Formkörper wegen seiner Stahlhülse tangential nicht aufweitbar ist. Bei dünn ausgebildeten Manschetten führt dies zum Einreißen der Manschette an Trennflansch bzw. Dichtringen und den jeweils angrenzenden Bereichen (DE-A-25 01 273).

Angesichts dieses Standes der Technik liegt der Erfindung die Aufgabe zugrunde, eine die Elastomerteile schonend herstellbare korrosionsbeständige Steckverbindungsmuffe mit möglichst geringer radialer Wandstärke für Vortriebsrohre zu schaffen, bei der Muffenhülse und Dichtungselemente zu einer Baueinheit zusammengefasst sind.

Zur Lösung dieser Aufgabe wird eine Steckverbindungsmuffe der im Oberbegriff des Anspruchs 1 genannten Art geschaffen, die erfindungsgemäß die im kennzeichnenden Teil des Anspruchs 1 genannten Merkmale aufweist.

Gegenstand der Erfindung ist also eine Steckverbindungsmuffe für Vortriebsrohre, bei der der lichte Innendurchmesser der Manschette auf beiden Seiten des Trennflansches jeweils an der axial nach außen weisenden Seite eines jeden ringförmigen Dichtelementes größer ist als der lichte Innendurchmesser der Manschette an der axial nach innen weisenden Seite des ringförmigen Dichtelementes. Das so gestaltete Profil der Manschette im Inneren der Steckverbindungsmuffe ermöglicht ein problemloses Entformen der Steckverbindungsmuffe nach Herstellung durch Spritzguß. Bei der Herstellung der Steckverbindungsmuffe wird ein etwa in Höhe des zentralen Trennflansches geteilter Formkern verwendet, wobei die beiden Formkernhälften beim Entformen axial nach außen gezogen werden. Dabei werden die radial nach innen vorspringenden ringförmigen Dichtelemente einer Scherbelastung in Bewegungsrichtung des Formkernes unterworfen. Da eine tangentiale oder radiale Aufweitung der Steckverbindungsmuffe wegen der integrierten formstabil-flexiblen, radial nicht aufweitbaren Hülse nicht möglich ist, besteht die einzige Möglichkeit für das Dichtelement, der Scherbelastung zu einem beträchtlichem Teil auszuweichen, darin, sich in die Mulde an seiner axial nach außen weisenden Seite in der Manschette hinein zu verformen. Da der lichte Innendurchmesser der Manschette an der axial nach außen weisenden Seite des ringförmigen Dichtelementes größer ist als an seiner axial nach innen weisenden Seite wird das ringförmige Dichtelement nur mäßig komprimiert und geringerer Scherbeanspruchung ausgesetzt. Dies ermöglicht die Herstellung einer Steckverbindungsmuffe für Vortriebsrohre mit hinreichend kleiner axialer Wandstärke ohne die Gefahr einer Beschädigung der Steckverbindungsmuffe beim Herstellungsprozeß in Kauf nehmen zu müssen.

Als weiterer Vorzug der erfindungsgemäßen Steckverbindungsmuffe kann deren anhaltende Korrosionsbeständigkeit genannt werden, da die die Hülse innen-und außenseitig umgreifende anvulkanisierte gummielastische Manschette die Korrosion der meist aus Stahl bestehenden Hülse wirksam verhindern kann.

Erfindungsgemäß ist axial zu jeder Seite des zentralen Trennflansches mindestens ein an die Manschette angeformtes ringförmiges Dichtelement vorgesehen. Entsprechend einer bevorzugten Ausgestaltung der Erfindung befinden sich axial zu jeder Seite des Trennflansches zwei ringförmige Dichtelemente, um die von den eingesteckten Rohren senkrecht zur Achse der Steckverbindungsmuffe übertragenen Scherkräfte auf zwei Dichtelemente zu verteilen. Nach einer bevorzugten Ausgestaltung der Erfindung befindet sich ein ringförmiges Dichtelement vor jeder Muffenöffnung, wobei an der Muffenöffnung ein Ringfalz ausgebildet ist, dergestalt, daß der lichte Innendurchmesser der Manschette an der der Muffenöffnung zugekehrten Seite des ringförmigen Dichtelementes, also der lichte Falzdurchmesser, größer ist als der lichte Innendurchmesser der Manschette an der Muffenöffnung abgekehrten axial innenliegenden Seite des ringförmigen Dichtelementes. Selbstverständlich können aber auch mehr ringförmige Dichtelemente an die Manschette angeformt sein.

Entsprechend einer weiteren bevorzugten Ausgestaltung der Erfindung ist der zentrale Trennflansch axial dünn ausgebildet, und zwar insbesondere dünner als bei sonst vergleichbaren Manschetten, die nicht Vortriebszwecken dienen. Mit dieser Maßnahme wird erreicht, daß die beim Entspannen der Vortriebsleitung von den Trennflanschen auf den Strang der Vortriebsrohre übertragene Rückstellkraft, die die Vortriebsrohre zurücktreibt, vermindert wird.

Der Trennflansch ist einerseits axial so dünn wie möglich ausgebildet, um die Auswirkung der auf den vorgetriebenen Rohrstrang additiv einwirkenden Rückstellkraft des Elastomers so klein wie möglich zu halten, ist andererseits aber axial so dick wie erforderlich ausgebildet, um die stoßenden Stirnseiten der Rohre vor einer Beschädigung zu bewahren.

Die ringförmigen Dichtelemente können unterschiedlich ausgebildet sein. Entsprechend einer bevorzugten Ausgestaltung der Erfindung sind die ringförmigen Dichtelemente als Ringrippen ausgebildet. Entsprechend einer weiteren Ausgestaltung der Erfindung kann das ringförmige Dichtelement auch als hinterschnittene Lippendichtung ausgebildet sein. Steckverbindungsmuffen für Vortriebsrohre mit hinterschnittenen ringförmigen Dichtelementen neigen ganz besonders zum Einreißen beim Entformen, wenn die Steckverbindungsmuffe nicht mit einem im kennzeichnenden Teil des Anspruches 1 beschriebenen Manschettenprofil versehen ist.

Das zur Fertigung der Manschette und der ringförmigen Dichtelemente verwendete Elastomer hat vorzugsweise eine Härte von größer als 40 Shore A.

Nach einer bevorzugten Ausgestaltung der Erfindung ist die Hülse der Steckverbindungsmuffe ein Lochstahlblech, das mit Gummi oder Kunststoff umspritzt ist. Die radiale Wanddicke des Lochbleches ist vorzugsweise in Relation zur radialen Dicke der Manschette klein gehalten.

Die Erfindung ist im folgenden anhand eines Ausführungsbeispieles in Verbindung mit der Zeichnung näher erläutert. Es zeit die einzige Figur, nämlich die

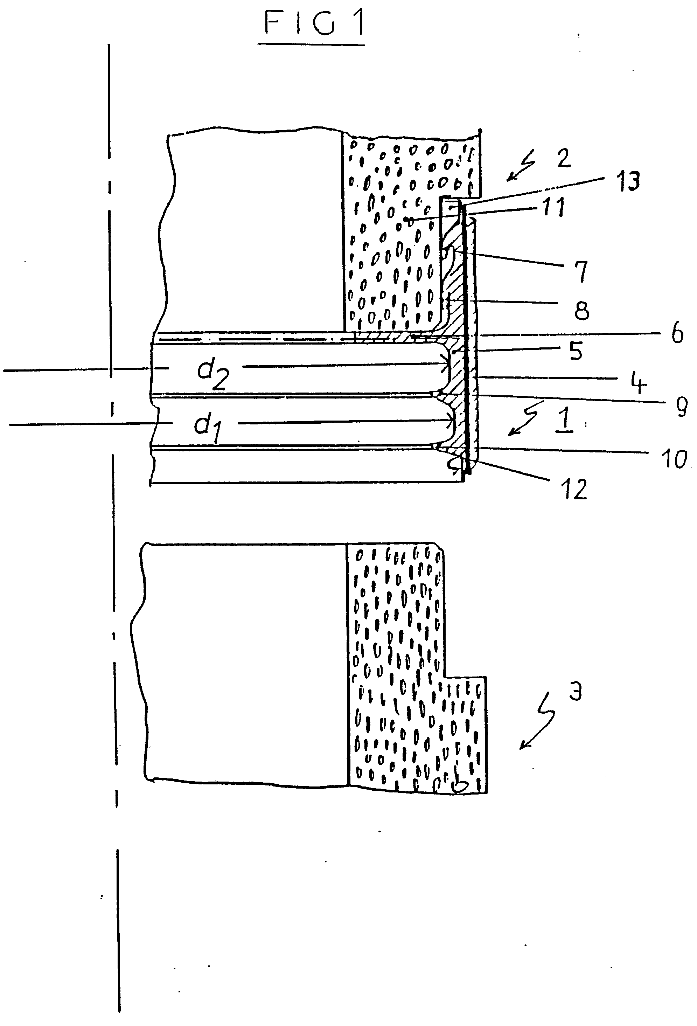

Fig. 1 einen Axialschnitt durch eine erfindungsgemäße Steckverbindungsmuffe mit zwei Rohrspitzenden, wobei eines der beiden Rohrspitzenden in die Steckverbindungsmuffe eingesteckt ist.

Die in Fig. 1 dargestellte Steckverbindungsmuffe 1 besteht aus einem im wesentlichen zylindrischen formstabil-flexiblem Lochstahlblech 4, das in eine gummielastische Manschette 5 eingebettet ist. Die Härte des zur Manschette ausgeformten EPDM beträgt 60 Shore A. Aus dem gleichen Elastomer sind ein Trennflansch 6 zur Abpufferung der in die Steckverbindungsmuffe eingesteckten Rohrspitzenden sowie ringförmige Dichtlippen 7, 8, 9, 10 angeformt In dem dargestellten Ausführungsbeispiel sind axial zu jeder Seite des Trennflansches zwei Dichtlippen 7, 8, 9, 10 ausgebildet ; innerhalb des Bereichs der vorliegenden Erfindung sind jedoch auch Steckverbindungsmuffen mit nur je einem ringförmigen Dichtelement axial zu jeder Seite des Trennflansches anzusehen. Die Dichtlippen 7, 8, 9, 10 im vorliegenden Ausführungsbeispiel sind nicht hinterschnitten ; jedoch können anstelle der dargestellten Dichtlippen auch hinterschnittene Dichtlippen vorgesehen sein. Die Dichtlippen 7 und 8 sind aus ihrer Ausgangslage durch das in die Steckverbindungsmuffe eingeschobene Rohrspitzende 11 des Vortriebrohres 2 in axialer Richtung zum Muffengrund hin verformt und werden im wesentlichen durch die Hülse 4 gestützt gegen das Rohrspitzende 11 dichtend gepreßt. Aus Fig. 1 ist deutlich zu erkennen, daß der radiale Außendurchmesser des Rohrspitzendes 11 mit aufliegender Steckverbindungsmuffe 1 den radialen Außendurchmesser des Vortriebrohres 2 nicht übersteigt und daß die radiale Dicke der Steckverbindungsmuffe in Bezug auf die radiale Wanddicke des Vortriebrohres klein gehalten ist.

Der lichte Innendurchmesser der Manschette zwischen Trennflansch 6 und axial benachbarten Dichtlippen 9 und 8 bzw. zwischen axial benachbarten Dichtlippen 7 und 8 bzw. 9 und 10 nimmt von axial innen nach axial außen zu, wobei der lichte Innendurchmesser der Manschette an der axial nach außen weisenden Seite jeder Dichtlippe 7, 8, 9, 10 größer ist als der lichte Innendurchmesser der Manschette an der axial nach innen weisenden Seite der Dichtlippe 7, 8, 9, 10. Der lichte Innendurchmesser der Manschette zwischen Trennflansch 6 und axial benachbarten Dichtlippen 8 und 9 ist in diesem Ausführungsbeispiel in axialer Richtung konstant. Ebenso ist der lichte Innendurchmesser der Manschette zwischen axial benachbarten Dichtlippen 9, 10 und 7, 8 in axialer Richtung konstant. Die Manschette kann aber in dem Bereich zwischen Trennflansch 6 und axial benachbarten Dichtlippen 8, 9 bzw. zwischen den Dichtlippen 9, 10 und 7, 8 anders ausgebildet sein, sofern nur der lichte Innendurchmesser der Manschette an der axial nach außen weisenden Seite der Dichtlippen 7, 8, 9, 10 größer ist als an deren axial nach innenweisenden Seiten. An den axial äußeren Dichtlippen 7, 10 ist axial außen je ein Ringfalz 12, 13 ausgebildet, wobei der lichte Falzdurchmesser größer ist als der lichte Innendurchmesser der Manschette an der der Muffenöffnung abgekehrten axial innenliegenden Seite der Dichtlippen 7, 10.

Der Trennflansch 6 ist axial dünner als sonst gebräuchlich ausgebildet, um den durch die Rückstellkraft des Elastomers bewirkten Rücktrieb des Rohrstanges klein zu halten, jedoch nicht so dünn, daß die Stirnseiten der Rohrspitzenden beim Vortrieb beschädigt werden. Bei einer Nennweite der Rohre von beispielsweise 200 mm ist der Flansch 6 axial vorzugsweise 1 bis 3 mm dick.

In Fig. 1 ist neben dem in die Steckverbindungsmuffe 1 eingeschobenen Rohrspitzende des Vortriebsrohres 2 ein Rohrspitzende eines Vortriebsrohres 3 dargestellt, das nicht in die Steckverbindungsmuffe 1 eingeschoben ist.

## Patentansprüche

1. Steckverbindungsmuffe für Vortriebsrohre aus einer flexibel formstabilen, radial nicht aufweitbaren Hülse, einer die Hülse innen- und außenseitig umschließenden anvulkanisierten gummielastischen Manschette, einem axial mittig an die Manschette angeformten Innenflansch als Trennflansch zwischen den Stirnseiten der miteinander zu verbindenden Rohrenden und axial zu jeder Seite des Trennflansches mindestens einem an die Manschette angeformten ringförmigen Dichtelement, dadurch gekennzeichnet, daß der lichte Innendurchmesser ($d_1$) der Manschette (5) auf beiden Seiten des Trennflansches (6) jeweils an der axial nach außen weisenden Seite eines jeden ringförmigen Dichtelementes (7, 8, 9, 10) größer ist als der lichte Innendurchmesser ($d_2$) der Manschette (5) an der axial nach innen weisenden Seite des ringförmigen Dichtelementes (7, 8, 9, 10).

2. Steckverbindungsmuffe nach Anspruch 1, dadurch gekennzeichnet, daß an jeder der beiden Steckverbindungsmuffenöffnungen ein Ringfalz (12, 13) ausgebildet ist, an dem nach axial innen ein ringförmiges Dichtelement (7, 10) vorgesehen ist, wobei der lichte Innendurchmesser der Manschette (5) an der der Steckverbindungsmuffenöffnung zugekehrten Seite des ringförmigen Dichtelementes (7, 10), also der lichte Falzdurchmesser, ebenfalls größer ist als der lichte Innendurchmesser der Manschette (5) an der der Steckverbindungsmuffenöffnung abgekehrten axial innenliegenden Seite des ringförmigen Dichtelementes (7, 10).

3. Steckverbindungsmuffe nach einem der Ansprüche 1 oder 2, dadurch gekennzeichnet, daß die Hülse (4) ein Lochstahlblech ist.

4. Steckverbindungsmuffe nach einem der Ansprüche 1 bis 3, dadurch gekennzeichnet, daß das ringförmige Dichtelement (7, 8, 9, 10) als Ringrippe ausgebildet ist.

5. Steckverbindungsmuffe nach einem der Ansprüche 1 bis 3, dadurch gekennzeichnet, daß das ringförmige Dichtelement (7, 8, 9, 10) als hinterschnittene Lippendichtung ausgebildet ist.

6. Steckverbindungsmuffe nach einem der Ansprüche 1 bis 5, dadurch gekennzeichnet, daß der Trennflansch (6) axial dünn ist.

## Claims

1. Plug-in socket for driving pipes comprising a flexible, dimensionally stable, radially non expandable sleeve, a rubber elastic collar surrounding the sleeve at the outer side and the inner side and being vulcanized thereto, an inner flange axially in the center molded-on to the collar and serving as separating flange between the front faces of the pipe ends to be connected with each other, and axially at each side of the separating flange at least one ring-like sealing element molded-on the collar, characterized in that the clear inner diameter ($d_1$) of the collar (5) at both sides of the separating flange is greater each at the axially outward facing side of each annular sealing element (7, 8, 9, 10) than the clear inner diameter ($d_2$) of the collar (5) at the axially inwardly directed side of the annular sealing element (7, 8, 9, 10).

2. Plug-in socket according to claim 1, characterized in that at each side of the two openings of the plug-in socket a ringfold (12, 13) is formed which is equipped at its axially inward side with an annular sealing element (7, 10), whereby the clear inner diameter of the collar (5) at that side of the annular sealing element (7, 10) which is directed towards the opening of the plug-in socket, i. e. the clear inner diameter of the fold, is also greater than the clear inner diameter of the collar (5) at the axially inward lying side of the annular sealing element (7, 10) which shows away from the opening of the plug-in socket.

3. Plug-in socket according to one of the claims 1 or 2, characterized in that the sleeve (4) is a perforated steel plate.

4. Plug-in socket according to one of the claims 1 to 3, characterized in that the annular sealing element (7, 8, 9, 10) is a ring rip.

5. Plug-in socket according to one of the claims 1 to 3, characterized in that the annular sealing element (7, 8, 9, 10) is an undercut lip sealing.

6. Plug-in socket according to one of the claims 1 to 5, characterized in that the separating flange (6) is axially thin.

## Revendications

1. Manchon de liaison emboîtable pour tubes d'avancement, constitué d'une douille rigide de forme, tout en étant flexible et ne pouvant pas s'élargir radialement, d'une manchette, en gomme élastique, vulcanisée sur la douille et l'enveloppant, à l'intérieur et à l'extérieur, d'une bride intérieure, formant bride de séparation entre les faces frontales des extrémités de tube à raccorder entre elles, bride moulée sur la manchette, axialement en son milieu, et, axialement sur chaque côté de la bride de séparation, d'au moins un élément d'étanchéité annulaire moulé sur la manchette, caractérisé en ce que le diamètre intérieur libre ($d_1$) de la manchette (5), des deux côtés de la bride de séparation (6), sur chacun des côtés, situés axialement vers l'extérieur, de chaque élément d'étanchéité annulaire (7, 8, 9, 10) est plus grand que le diamètre intérieur libre ($d_2$) de la manchette (5) du côté, situé axialement vers l'intérieur, de l'élément d'étanchéité annulaire (7, 8, 9, 10).

2. Manchon de liaison suivant la revendication 1, caractérisé en ce que, sur chacune des deux ouvertures du manchon de liaison emboîtable, est réalisée une rainure annulaire (12, 13), pour laquelle est prévu, axialement vers l'intérieur, un élément d'étanchéité annulaire (7, 10), le diamètre intérieur libre de la manchette (5) du côté de l'élément d'étanchéité annulaire (7, 10) qui est situé vers l'ouverture du manchon de liaison emboîtable, donc le diamètre libre de la nervure, est, de même, plus grand que le diamètre intérieur libre de la manchette (5) du côté, situé à l'intérieur, de l'élément d'étanchéité annulaire (7, 10) qui est situé du côté opposé à l'ouverture du manchon de liaison emboîtable.

3. Manchon de liaison suivant l'une des revendications 1 ou 2, caractérisé en ce que la douille (4) est une tôle d'acier perforée.

4. Manchon de liaison suivant l'une quelconque des revendications 1 à 3, caractérisé en ce que l'élément d'étanchéité annulaire (7, 8, 9, 10) est réalisé sous la forme d'une nervure annulaire.

5. Manchon de liaison suivant l'une quelconque des revendications 1 à 3, caractérisé en ce que l'élément d'étanchéité annulaire (7, 8, 9, 10) est réalisé sous la forme d'une lèvre d'étanchéité à contre-dépouille.

6. Manchon de liaison suivant l'une quelconque des revendications 1 à 5, caractérisé en ce que la bride de séparation (6) est mince axialement.

FIG 1